Europäisches Patentamt

European Patent Office

Office européen des brevets

(11) Veröffentlichungsnummer: **0 631 993 A1**

## (12) EUROPÄISCHE PATENTANMELDUNG

(21) Anmeldenummer: **94109449.2**

(22) Anmeldetag: **18.06.94**

(51) Int. Cl.6: **C03B 35/10**

(30) Priorität: **02.07.93 DE 4322008**

(43) Veröffentlichungstag der Anmeldung:
**04.01.95 Patentblatt 95/01**

(84) Benannte Vertragsstaaten:
**AT BE DE ES FR GB IT NL PT SE**

(71) Anmelder: **SMIT OVENS B.V.**
**Groenestraat 265**
**NL-6531 HK Nijmegen (NL)**

(72) Erfinder: **Doerwald, Dieter**
**Blauwe Hof 6010**
**NL-6602 XG Wychen (NL)**

(74) Vertreter: **Patentanwälte Schulze Horn und**
**Hoffmeister**
**Goldstrasse 36**
**D-48147 Münster (DE)**

(54) **Verfahren und Vorrichtung zum Schieben von Glasgegenständen bei Förderband-Übergängen.**

(57) Die Erfindung betrifft ein Verfahren und eine Vorrichtung zum gleichzeitigen Schieben mehrerer, auf einem ersten Transportband mit der Geschwindigkeit $v_1$ angelieferter Glasgegenstände auf ein quer zu dem ersten Transportband laufendes zweites Transportband, das mit geringerer Geschwindigkeit $v_2$ als das erste Transportband läuft, mit Hilfe eines Schiebebalkens, der eine sich aus überlagernden Bewegungskomponenten in X- und Y-Richtung bestehende Bewegung vollzieht, wobei die X-Richtung in der Transportrichtung des ersten Transportbandes und die Y-Richtung in der Transportrichtung des zweiten Transportbandes verläuft. Zur Verminderung des Bewegungsraumes fürt der Schiebebalken ausschließlich seine Bewegung in der X-Y-Ebene aus.

Fig.1

Die Erfindung betrifft ein Verfahren zum gleichzeitigen und abstandswahrenden schieben mehrerer, auf einem ersten Transportband mit der Geschwindigkeit $v_1$ angelieferter Glasgegenstände auf ein quer zu dem ersten Transportband laufendes zweites Transportband, das mit geringerer Geschwindigkeit $v_2$ als das erste Transportband läuft, mit Hilfe eines Schiebebalkens, der mit Mulden für die Glasgegenstände versehen ist und eine sich aus überlagernden Bewegungskomponenten in X- und Y-Richtung bestehende Bewegung vollzieht, wobei die X-Richtung in der Transportrichtung des ersten Transportbandes und die Y-Richtung in der Transportrichtung des zweiten Transportbandes verläuft. Die Erfindung bezieht sich ferner auf eine Vorrichtung zur Durchführung des Verfahrens.

Ein solches Verfahren und eine solche Vorrichtung sind aus der EP 0 499 733 A1 bekannt. Das bekannte Verfahren und die entsprechende Vorrichtung bedienen sich eines Schiebebalkens, der heb- und senkbar an einem Hubteil einer Tragvorrichtung befestigt ist. Demnach wird sowohl eine Bewegung in der X-Y-Ebene vollzogen als auch eine Hubbewegung. Die zusätzliche Hubbewegung ist erforderlich, um bei der relativ schnellen Anlieferung der Glasgegenstände auf dem ersten Transportband diesen auszuweichen und den Schiebebalken wiederum hinter die ankommende Front der Glasgegenstände zu verstellen.

Nachteilig bei der bekannten Vorrichtung ist, daß der Schiebebalken ein relativ großes Bewegungsvolumen benötigt, so daß auch der Zugang zu der Ofenöffnung, in die der Schiebebalken hineinragt, relativ groß gestaltet werden muß. Dies läßt große Wärmeverluste entstehen, die zu ungleichmäßigen Abkühlungsprozessen der Glasgegenstände sowie erheblichen Energieverlusten führen.

Es stellt sich demnach die Aufgabe, das eingangs genannte Verfahren und die nach dem Verfahren arbeitende Vorrichtung so auszubilden, daß ein möglichst geringes Bewegungsvolumen des Schiebebalkens erreicht wird, so daß es ermöglicht ist, eine Isolierung um den Übergangsbereich vom ersten auf das zweite Transportband grundsätzlich einbaubar zu machen, so daß die Wärmeverluste und die damit verbundenen Abkühlungsvorgänge der Glasgegenstände besser beherrschbar sind.

Diese Aufgabe wird gelöst bei einem Verfahren der eingangs genannten Art, das dadurch gekennzeichnet ist, daS der Schiebebalken ausschließlich seine Bewegungen in der X-Y-Ebene ausführt, und zwar in der in Anspruch 1 angegebenen Taktfolge.

Bei den Gegenständen handelt es sich in erster Linie um noch heiße, frisch hergestellt Flaschen, die sehr berührungsempfindlich sind und sich daher nicht gegenseitig kontaktieren dürfen. Es kann daher nicht auf einen Stand der Technik zurückgegriffen werden, wie er aus der Konserven- oder Packmittelindustrie bekannt ist (vgl. US-A 2 217 982), bei dem ein Schiebebalken die Gegenstände unter gegenseitigem Kontakt zusammen- und weiterschiebt.

Techisch möglich können die Bewegungen des schiebebalkens zwar grundsätzlich auch durch einen Kurbeltrieb erfolgen; vorteilhafterweise wird jedoch die Vorrichtung zur Durchführung des Verfahrens so konstruiert, daß der Schiebebalken mit einem im Bereich des Überganges zwischen den Förderbändern angeordneten sowohl in X- als auch in Y-Richtung verfahrbaren Schlitten über einen Tragbalken verbunden ist. Es hat sich herausgestellt, daS bei Verwendung eines Schlittens, der sehr leicht und beweglich konstruiert werden kann, auf eine Bewegung in die dritte Dimension verzichtet werden kann. Auch bei sehr schneller Anlieferung der Glasgegenstände auf dem ersten Transportband läßt sich durch entsprechende Bewegung des Schiebebalkens dieser um die ankommende Reihe von Glasgegenständen herum ausweichend bewegen und in die entsprechende, erneute Position einfahren.

Ein besonderer Vorteil ist bei der Anwendung des vorgenannten Verfahrens, daß das Abstellen der Glasgegenstände auf dem zweiten Transportband durch unterschiedliche Verstellung des Schiebebalkens in X-Richtung in versetzten Reihen erfolgen kann, so daß eine Verdichtung der Positionen der Glasgegenstände auf dem Förderband erfolgt.

Der verstellbare Schlitten selbst sollte möglichst leicht und beweglich ausgeführt sein, d.h. nicht mit Antriebsvorrichtungen versehen sein, die seine Masse erhöhen. Es wird deshalb vorgeschlagen, daß der Schlitten durch stationäre Antriebsvorrichtungen, insbesondere Drehspindel- oder Ketten-Antriebe verstellbar ist. Mit besonderem Vorteil ist es möglich, den Übergang zwischen den beiden Transportbändern mit einer Korridor-Ummantelung zu umgeben, die lediglich einen Bewegungsschlitz aufweist, der vom Tragbalken, und einer Einfahröffnung, die vom ersten Transportband durchsetzt ist, aufweist, wobei der Schlitten außerhalb der Korridor-Ummantelung angeordnet ist. Ein Ausführungsbeispiel der Erfindung wird anhand der Zeichnung beschrieben. Die Figuren der Zeichnung zeigen:

Figur 1 eine Vorrichtung in Draufsicht;

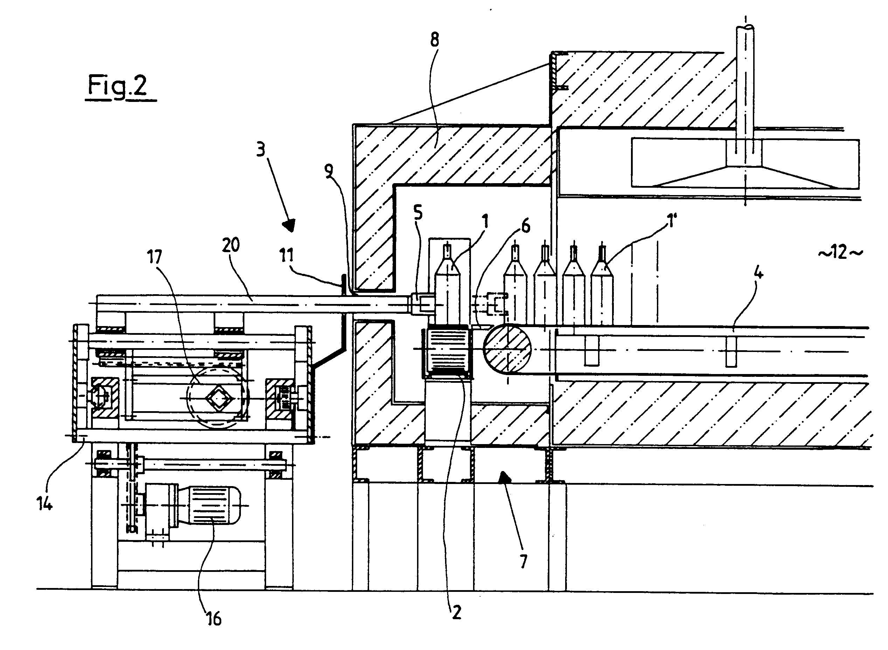

Figur 2 eine Vorrichtung in Seitenansicht.

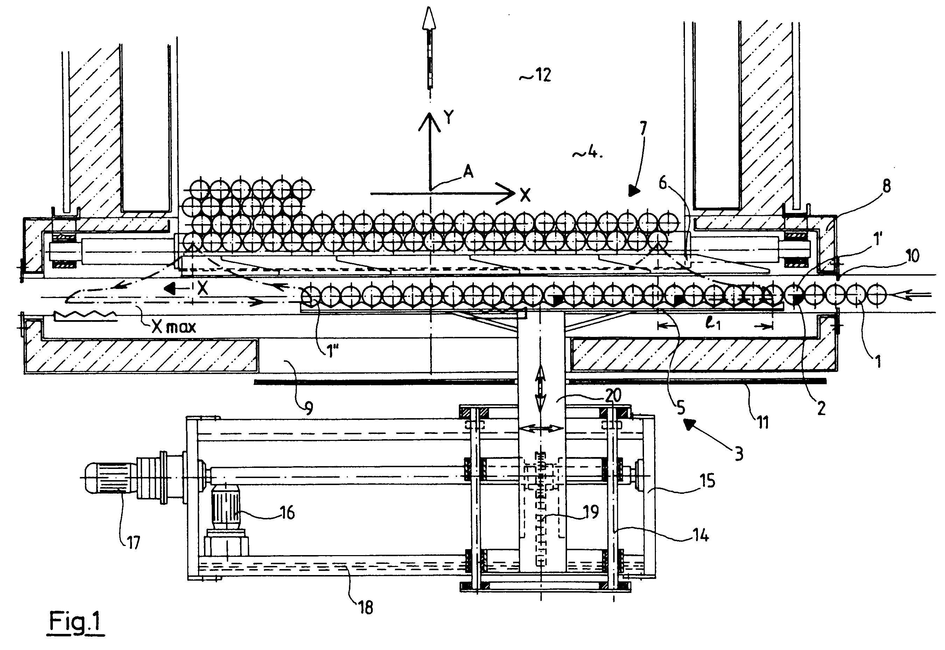

In Figur 1 ist die Übergabestation 3 von einem ersten Transportband 2 auf ein zweites Transportband 4 dargestellt. Das zweite Transportband 4 befindet sich innerhalb eines Ofens 12, der beispielsweise ein sogenannter Abkühlungsofen sein kann. Auf dem ersten Transportband 2 werden mit relativ hoher Geschwindigkeit $V_1$, z. B. 50 - 70 cm/s, Glasgegenstände 1, 1', beispielsweise Flaschen, angeliefert. Mehrere der angelieferten Glasgegenstände (im Ausführungsbeispiel 24), die sich bei der angelieferten Reihe an deren Spitze befinden, werden durch eine Vorrichtung 3 gleichzeitig von dem ersten Transportband 2 über stationäre Zwischenplatten 6 auf das in den Ofen 12 hineinlaufende zweite Transportband 4 aufgeschoben.

Das Transportband 2 läuft mit einer Geschwindigkeit $v_1$, während das Transportband 4 mit einer Geschwindigkeit $v_2$ verläuft. Dabei ist $v_1 > v_2$. Als beispielhafte Werte seien genannt:

$v_1$ = 65 cm/s;

$v_2$ = 1,5 cm/s.

Die vorgenannten Werte stellen nur Beispielswerte dar. Sie sollen jedoch verdeutlichen, daß erhebliche Geschwindigkeitsunterschiede bestehen.

Bei den Glasgegenständen 1, 1', 1'' handelt es sich üblicherweise um frisch geformte Glasflaschen, die noch eine Temperatur im Bereiche von etwa 500° C haben. Die Glasgegenstände müssen daher äußerst vorsichtig behandelt werden. Sie sind anfällig gegen Bruch und Verformung. Sie müssen daher auch gegeneinander Abstand wahren und dürfen sich weder beim Transport noch auf den Förderbändern berühren.

Zum Verschieben der Glasgegenstände 1, 1' werden diese von einem mit Mulden versehenen Verschiebebalken 5 geschoben. Der Schiebebalken ist mit einem Tragbalken 20 verbunden. Die beiden starr verbundenen Teile 5 und 20 können eine sich aus überlagernden Bewegungskomponenten in X- und Y-Richtung bestehende Bewegung vollziehen, wobei die X-Richtung in der Transportrichtung des ersten Transportbandes 2 und die Y-Richtung in der Transportrichtung des zweiten Transportbandes 4 verläuft, wie dies auch aus der Zeichnung zu ersehen ist. In einer (nicht dargestellten) Ausgangsposition, d. h. X = 0, liegt der Tragbalken 20 genau in der Achse A des zweiten Förderbandes.

Der Tragbalken 20 ist mit einem Schlitten 14 verbunden, der auf einem Schlittengestell 15 an entsprechenden Traversen in X-Richtung verfahrbar ist. Der Schlitten ist mit einer möglichst geringen Masse ausgestattet, um seine Bewegungen unter geringen mechanischem Aufwand steuern zu können. Die Bewegung in X-Richtung erfolgt über einen Antriebsmotor 16 und Zahnriemen 18. Die Bewegung in Y-Richtung wird vom Antriebsmotor 17 ermöglicht, der einen Zahnriemen 19 antreibt. Die Antriebsorgane sind ähnlich gestaltet, wie dies bei sogenannten Plottern bekannt ist. Die Steuerung der Motore, ihre Antriebsrichtung und Geschwindigkeit wird über eine nicht dargestellte numerische Steuerung durchgeführt.

Dabei erfolgt die Bewegung des Systems Tragbalken + Schiebebalken 20; 5 im wesentlichen in drei Takten:

Im 1. Takt fährt der Schiebebalken von einer in der Figur 1 ganz linken Position ($X_{max}$) den auf dem ersten Transportband ankommenden Glasgegenständen entgegen, und zwar so weit, daß wenigstens eine Strecke $l_1$ eingehalten wird, die dem Produkt aus Geschwindigkeit des ersten Transportbandes $v_1$ multipliziert mit der Zeitdauer, die der Schiebebalken 5 von der Ausgangsposition bis zur Übergabeposition braucht. Der erste Glasgegenstand 1', der nicht vom Schiebebalken 5 erfaßt wird, wandert während der Bewegung des Schiebebalkens weiter und soll schließlich die Position 1'' erreichen, wenn der Schiebebalken seine Bewegung vollendet hat.

Nach Kontaktieren der Glasgegenstände mit dem Schiebebalken fährt dieser im 2. Takt mit den Glasgegenständen in X-Richtung mit der Geschwindigkeit $v_1$ die Strecke $l_1$ und Y-Richtung die Strecke $l_2$, die der Entfernung vom Aufnahmeort des Glasgegenstandes bis zum Abstellplatz auf dem zweiten Transportband 4 entspricht, ab. Die beiden Bewegungen überlagern sich und ergeben eine Bewegungskurve, wie sie strichpunktiert exemplarisch an dem Glasgegenstand rechts außen dargestellt ist. Nach dem Abstellen bewegt sich der Schiebebalken mit erhöhter Geschwindigkeit weiter, so daß seine rechte Kante dem mittlerweile weitergewanderten Glasgegenstand 1' ausweichen kann. Der Schiebebalken vollzieht dabei die Bewegung, die auf der linken Seite der Zeichnung mit einem Pfeil auf einer strichpunktierten Linie dargestellt ist. Schließlich gelangt der Schiebebalken in die links außen liegende Position $X_{max}$, aus der er mit erhöhter Geschwindigkeit in die Aufnahmeposition zurückfährt, d. h. den ankommenden Glasgegenständen entgegenfährt.

Die vorgenannte Bewegungsabfolge vollzieht sich ohne eine Bewegung des Schiebebalkens in die dritte Dimension. Es ist daher möglich, die Öffnung des Ofens 12 mit einer Korridor-Ummantelung 8 zu umbauen, die verhindert, daS Wärmeströme am Ofenende in praktisch bedeutsamem Maße entweichen. Dies macht eine Steuerung des Wärmeflusses und der Abkühlung wesentlich leichter. Die Korridor-Ummantelung 8 besteht aus einer isolierenden Wand, die wie aus dem Ofenbau bekannt, mit einer isolierenden Masse, beispielsweise Steinwolle oder dergleichen isolierend gefüllt ist. Die Korridor-Ummantelung weist im vorderen Teil einen Schlitz 9 auf. Am Schlitten 14 ist darüberhinaus ein Hitzeschild 11 befestigt, das den Schlitten 15 gegen die aus dem Schlitz 9 heraustretende Strahlungswarme abschirmt und die Öffnung des Ofens abdichtet. Insgesamt läßt es damit die Vorrichtung 3 zu, daS eine energiegünstigere und die Produktionsabläufe verbessernde Übergabe zwischen den beiden Transportbändern 2 und 4 gegeben ist.

Ein weiterer Vorteil ist, daß durch die entsprechende Steuerung der Bewegungsabläufe des Schiebebalkens 5 alternierend die 24 Glasgegenstände versetzt zueinander auf dem Transportband 4 abgestellt werden können, so daß sich eine dichtere Positionierung ergibt. Bei der hier vorgeschlagenen X-Y-Steuerung des Schlittes ist dies ohne weiteres möglich. Hierdurch ergeben sich erhebliche Erhöhungen des Durchsatzes an Flaschen, die durch den Ofen 12 laufen.

**Patentansprüche**

1. Verfahren zum gleichzeitigen und abstandswahrenden Schieben mehrerer, auf einem ersten Transportband (2) mit der Geschwindigkeit $v_1$ angelieferter Glasgegenstände (1,1,',1'') auf ein quer zu dem ersten Transportband (2) laufendes zweites Transportband (4), das mit geringerer Geschwindigkeit $v_2$ als das erste Transportband läuft, mit Hilfe eines Schiebebalkens (5), der mit Mulden für die Glasgegenstände versehen ist und eine sich aus überlagernden Bewegungskomponenten in X- und Y-Richtung bestehende Bewegung vollzieht, wobei die X-Richtung in der Transportrichtung des ersten Transportbandes und die Y-Richtung in der Transportrichtung des zweiten Transportbandes verläuft,
dadurch gekennzeichnet, daß
der Schiebebalken (5) ausschließlich seine Bewegung in der X-Y-Ebene ausführt, und zwar in folgender Taktfolge (bei X = 0 liegt der Schiebebalken symmetrisch zur Mitte des zweiten Transportbandes 4):
1. Takt: (Dauer $t_1$)
Der Schiebebalken (5) fährt aus seiner äußersten Position in X-Richtung in - X-Richtung ("Minus - X-Richtung") den ankommenden Glasgegenständen wenigstens um den Betrag (von X = 0 gesehen)

$$l_1 = v_1 \cdot t_1$$

entgegen und nimmt die Glasgegenstände in den Mulden auf;
2. Takt: (Dauer $t_2$)
der Schiebebalken (5) fährt mit den Glasgegenständen in X-Richtung mit der Geschwindigkeit $v_1$ die Strecke $l_1$ und in Y-Richtung die Strecke $l_2$, die der Entfernung vom Aufnahmeort der Glasgegenstände bis zum Abstellplatz auf dem zweiten Transportband entspricht;
3. Takt: (Dauer $t_3$)
der Schiebebalken (5) fährt in X-Richtung eine Strecke $l_3$ und bewegt sich bis zum Ende der äußersten Position $X_{max}$ und in - Y-Richtung die Strecke $l_2$, wobei das Ende des Schiebebalkens (5) der ankommenden Reihe von Glasgegenständen ausweicht,
anschließend erneutes Ausführen des 1. Taktes usw.

2. Verfahren nach Anspruch 1, dadurch gekennzeichnet, daß das Abstellen der Glasgegenstände auf dem zweiten Transportband durch unterschiedliche Verstellung des Schiebebalkens(5) in X-Richtung in versetzten Reihen erfolgt, so daß eine Verdichtung der Positionen der Glasgegenstände auf dem zweiten Förderband erfolgt.

3. Vorrichtung zur Durchführung des Verfahrens nach Anspruch 1 und 2, zum gleichzeitigen Schieben mehrerer, auf einem ersten Transportband (2) mit der Geschwindigkeit $v_1$ angelieferter Glasgegenstände auf ein quer zu dem ersten Transportband laufendes zweites Transportband (4), das mit geringerer Geschwindigkeit $v_2$ als das erste Transportband läuft, mit Hilfe eines Schiebebalkens (5), der eine sich aus überlagernden Bewegungskomponenten in X- und Y-Richtung bestehenden Bewegung vollzieht, wobei die X-Richtung in der Transportrichtung des ersten Transportbandes (2) und die Y-Richtung in der Transportrichtung des zweiten Transportbandes (4) verläuft, dadurch gekennzeichnet, daß der Schiebebalken (5) auf der zu den Glasgegenständen zeigenden Seite mit Mulden versehen und mit einem im Bereich zwischen den Übergängen der Förderbänder (2; 4) angeordneten, sowohl in X- als auch in Y-Richtung verfahrbaren Schlitten (14) über einen Tragbalken (20) verbunden ist.

4. Vorrichtung nach Anspruch 3, dadurch gekennzeichnet, daß der Schlitten (14) durch stationäre Antriebsvorrichtungen, insbesondere Drehspindel- oder Riemenantriebe verstellbar ist.

5. Vorrichtung nach Anspruch 3 zur Durchführung des Verfahrens nach Anspruch 2, dadurch gekennzeichnet, daß die Verstellbewegungen des zweiten Taktes in X-Richtung jeweils alternierend um etwa eine halbe Breite der Glasgegenstände (1, 1') geändert ist.

6. Vorrichtung nach Anspruch 3, dadurch gekennzeichnet, daß der Übergang zwischen den Transportbändern (2; 4) mit einer Korridor-Ummantelung (8) umgeben ist, die einen Bewegungsschlitz (9) aufweist, der vom Tragbalken (25) und einer Einfahröffnung (10), die vom ersten Transportband (2) durchsetzt ist, aufweist, wobei der Schlitten (14) außerhalb der Korridor-Ummantelung (8) angeordnet ist.

Fig.1

EP 0 631 993 A1

Fig.2

Europäisches
Patentamt

**EUROPÄISCHER RECHERCHENBERICHT**

Nummer der Anmeldung

EP 94 10 9449

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-3 687 262 (CAMPBELL)<br>* das ganze Dokument *<br>--- | 1,3 | C03B35/10 |
| X | US-A-3 040 867 (POSTEN)<br>* das ganze Dokument *<br>----- | 1,3 | |

**RECHERCHIERTE SACHGEBIETE (Int.Cl.6)**

C03B

Der vorliegende Recherchenbericht wurde für alle Patentansprüche erstellt

| Recherchenort | Abschlußdatum der Recherche | Prüfer |
|---|---|---|
| DEN HAAG | 24. Oktober 1994 | Van den Bossche, W |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes
Dokument

EPO FORM 1503 03.82 (P04C03)